(19) Europäisches Patentamt
European Patent Office
Office européen des brevets

(11) Veröffentlichungsnummer: **0 451 699 A1**

# (12) EUROPÄISCHE PATENTANMELDUNG

(21) Anmeldenummer: 91105331.2

(22) Anmeldetag: 04.04.91

(51) Int. Cl.5: **H01M 10/12, H01M 4/75**

(30) Priorität: **10.04.90 DE 4011531**

(43) Veröffentlichungstag der Anmeldung:
**16.10.91 Patentblatt 91/42**

(84) Benannte Vertragsstaaten:
**AT BE CH DE DK ES FR GB GR IT LI LU NL SE**

(71) Anmelder: **RETEN ELECTRONIC GmbH & Co.**
**Höhenstrasse 23**
**W-6277 Bad Camberg 5(DE)**

(72) Erfinder: **Dzenzersky, Victor A.**
**apt.19, Furmanova per.2,**
**Dnepropetrovsk 320027(SU)**
Erfinder: **Wassilliev, Sergueivladimirirovich,**
**P.E.T.S.M.Div.**
**IGTM AS Ukr.SSr, Simpheropolskaya str.2a,**
**Dnepropetrovsk 320600(SU)**
Erfinder: **Levotman, Evgueni Samuflovich,**
**P.E.T.S.M.Div.**
**IGTM AS Ukr.SSR, Simpheropolskaya str.2a,**
**Dnepropetrovsk 320600(SU)**
Erfinder: **Miasnikov, Boris G., P.E.T.S.M.Div.,**
**IGTM AS Ukr.SSR, Simpheropolskaya str.2a,**
**Dnepropetrovsk 320600(SU)**
Erfinder: **Theess, Rolf**
**Am Forsthaus 2**
**W-6274 Hünstätten-Wallrabenstein(DE)**

(74) Vertreter: **Weber, Dieter, Dr. et al**
**Dr. Dieter Weber, Dipl.-Phys., Klaus Seiffert,**
**Dr. Winfried Lieke, Patentanwälte,**
**Gustav-Freytag-Strasse 25**
**W-6200 Wiesbaden 1(DE)**

(54) **Zylindrischer Bleiakkumulator.**

(57) Die vorliegende Erfindung betrifft einen Bleiakkumulator in Zylinderform, wobei mindestens eine erste (4, 24) seiner Elektroden (2, 2', 3, 4) an ihrer Außenseite einer Zylindermantelform angepaßt ist und im wesentlichen parallel zu und in geringem Abstand von der Zylindermantelwand (1) des Akkumulators verläuft, und wobei beide Elektroden durch einen ionendurchlässigen Separator voneinander vor direktem Kontakt geschützt sind. Um einen Bleiakkumulator in Zylinderform mit den eingangs genannten Merkmalen zu schaffen, welcher relativ einfach und preiswert herstellbar ist und dennoch eine hohe Kapazität und eine möglichst hohe Zahl von Wiederaufladungszyklen aufweist, wird erfindungsgemäß vorgechlagen, daß mindestens die erste Elektrode (2, 2', 3, 4) als Gitter ausgebildet und mit aktiver Masse (3) in Pastenform bestrichen ist, welche Schwefelsäure und entweder Blei oder Bleidioxid in fein verteilter Form enthält, während die jeweils andere Elektrode Einrichtungen zur Aufnahme und zum Halten der jeweils anderen aktiven Masse, welche Bleidioxid bzw. Blei in fein verteilter Form enthält, aufweist.

Fig.1

EP 0 451 699 A1

Die vorliegende Erfindung betrifft einen Bleiakkumulator in Zylinderform, wobei mindestens eine erste seiner Elektroden an ihrer Außenseite der Zylinderform angepaßt ist und dabei im wesentlichen parallel zu und in geringem Abstand zur Zylindermantelfläche des Akkus verläuft und wobei beide Elektroden durch einen ionendurchlässigen Separator vor direktem Kontakt miteinander geschützt sind.

Ebenso betrifft die vorliegende Erfindung auch ein Verfahren zur Herstellung eines derartigen Bleiakkumulators, bei welchem ein im wesentlichen rechteckiger Streifen oder eine Platte aus einem Gittermaterial, vorzugsweise aus Blei, mit einer pastenartigen Mischung bestrichen wird, welche im wesentlichen Schwefelsäure und Blei oder Bleidioxid sowie gegebenenfalls ein Bindemittel enthält.

Bleiakkumulatoren sind an sich bereits seit langem bekannt, z.B. als sogenannte Autobatterien. Dabei besteht eine Zelle eines solchen Akkumulators im wesentlichen aus einer positiven und einer negativen Elektrode sowie einem Elektrolyten, wobei die positive Elektrode im allgemeinen eine Gitterplatte ist, die vorzugsweise aus Blei besteht und mit einer Bleidioxid ($PbO_2$) enthaltenden, sogenannten "aktiven Masse" bestrichen ist, während die negative Elektrode im wesentlichen identisch aufgebaut ist, jedoch mit einer lediglich elementares Blei (Pb) enthaltenden aktiven Masse bestrichen ist. Diese sogenannten "aktiven Massen" bestehen also im wesentlichen aus pulverförmigem, elementarem Blei bzw. Bleidioxid, welches mit Schwefelsäure und/oder einem Bindemittel zu einer pastenartigen Mischung verrührt ist. Hierdurch wird die an den Lage- und Entladevorgängen beteiligte Oberfläche der Elektroden beträchtlich vergrößert.

Die einzelnen Elektroden können auch aus mehreren gleichmäßig im vorhandenen Raum verteilten Platten bestehen. Zur Erzeugung höherer Spannungen werden mehrere derartige Zellen hintereinander geschaltet.

Die vorbeschriebene, spezielle Ausgestaltung der Elektroden bringt es mit sich, daß Bleiakkumulatoren im Handel im allgemeinen nur in Quaderform erhältlich sind, wie sie von den bereits erwähnten Autobatterien bekannt ist.

Andererseits sind in den letzten Jahrzehnten im Verlaufe der zunehmenden Miniaturisierung im gesamten Elektronikbereich zunehmend Geräte hergestellt worden, welche für den Batteriebetrieb geeignet und vorgesehen sind, wobei hierfür die handelsüblichen, genormten Batterietypen Verwendung finden.

Die große Verbreitung derartiger batteriebetriebener Geräte hat die Nachfrage nach derartigen Batterien, üblicherweise auf Zink-Kohle-Basis oder als Alkali-Mangan-Batterien, stark anwachsen lassen. Da jedoch diese Batterien nicht wiederaufladbar sind, birgt der stark erhöhte Batterieverbrauch beträchtliche Umweltgefahren in sich, da die Inhaltstoffe derartiger Batterien sehr umweltschädlich sind. Eine geordnete Entsorgung findet nur in sehr geringem Maße statt und ist außerdem relativ teuer.

Insofern erscheint es wünschenswert, derartige Batterien durch wiederaufladbare Akkumulatoren zu ersetzen.

Dabei soll der Begriff "Akkumulator" im Rahmen dieser Anmeldung so verwendet werden, daß bei diesen Zellen eine mehrfache (mindestens zehnfache) Wiederaufladbarkeit mit hinreichender Kapazität gewährleistet ist.

Es ist zwar schon ein Bleiakkumulator in Zylinderform des Typs R 20 vorgeschlagen worden, dessen Elektroden aus mehreren gewickelten Lagen besteht, jedoch hat sich die Kapazität dieser Zelle als relativ gering erwiesen, wohingegen herkömmliche Bleiakkumulatoren, sowohl auf ihr Gewicht und erst recht auf ihr Volumen bezogen, eine relativ hohe Energiedichte aufweisen. Dagegen sind die Energiedichten anderer verbreiteter Akkumulatoren geringer. So beträgt beispielsweise der ansonsten hauptsächlich verwendeten Nickel-Cadmium-Akkus etwa 27 V Ah/kg bei einer Nominalspannung von nur 1,2 Volt pro Zelle und bei einer mittleren Entladespannung von 1,0 Volt. Bezogen auf den bereits erwähnten Typ R 20 beträgt die Kapazität eines NiCd-Akku etwa 4 Ah.

Jedoch ist die Herstellung von NiCd-Akkus sehr aufwendig und die Produktionskosten sind entsprechend hoch.

Gegenüber diesem Stand der Technik liegt der vorliegenden Erfindung die Aufgabe zugrunde, einen Bleiakkumulator in Zylinderform mit den eingangs genannten Merkmalen zu schaffen, welcher relativ einfach und preiswert herstellbar ist und dennoch eine hohe Kapazität und eine möglichst hohe Zahl von Wiederaufladungszyklen aufweist.

Diese Aufgabe wird dadurch gelöst, daß mindestens die erste Elektrode als Gitter ausgebildet ist und mit einer pastenförmigen, aktiven Masse bestrichen ist, welche entweder Blei oder Bleidioxid in fein verteilter Form enthält, während die andere Elektrode Einrichtungen zur Aufnahme und zum Halten der jeweils anderen aktiven Masse mit Bleidioxid bzw. Blei aufweist.

Die bekannten Elektrodenplatten aus den quaderförmigen Akkus sind relativ starr. Insbesondere härtet auch die pastenartige aktive Masse nach relativ kurzer Zeit aus.

Die einzige bekannte zylindrische Bleizelle verwendet dagegen perforierte Folien, welche nicht mit aktiver Masse bestrichen werden können.

Dagegen geht die vorliegende Erfindung den Weg, statt dünner Folien mindestens für eine der Elektroden, welche sich zylindermantelförmig im wesentlichen an die Innenwand der äußeren Hülle einer solchen Zelle anlegt, ein mit aktiver Masse bestrichenes Gitter zu verwenden, wobei die andere Elektrode nicht notwendigerweise gitterförmig sein muß, jedoch generell Einrichtungen zum Aufnehmen und Halten aktiver Masse aufweisen sollte.

Es hat sich herausgestellt, daß bei einer derartigen Ausgestaltung die Kapazität derartiger Bleiakkus beträchtlich gesteigert werden kann. Die Kapazität einer solchen Zelle vom Typ R 20 mit einer Höhe von 62 mm und einem Durchmesser von 33 mm liegt je nach Ausführungsform und Entladedauer zwischen 2,5 und 4 Ah (Ampèrestunden) und ist insoweit mit der Kapazität eines entsprechenden NiCd-Akkus vergleichbar, wobei jedoch die Herstellung gegenüber einem NiCd-Akku erheblich einfacher und preiswerter ist. Gemäß einer besonders einfachen Ausführungsform der Erfindung hat die erste Elektrode die Form eines Zylindermantels, während die andere Elektrode aus einem zentralen Stab mit mehreren senkrecht zu dem Stab verlaufenden Plattenelementen besteht, welche entlang des Stabes im Abstand voneinander angeordnet sind, so daß zwischen diesen Plattenelementen aktive Masse aufnehmbar ist.

Dabei ist es zweckmäßig, wenn die Platten einstückig mit dem Stab verbunden sind. Vorzugsweise werden Stab und Plattenelemente aus Blei gegossen oder gepreßt. Unter Anpassung an die zylindrische Gestalt der Zelle sollte dabei sowohl der Stab seinerseits zylindrisch als auch die Plattenelemente kreisscheibenförmig ausgebildet und konzentrisch zur Zylindermantelelektrode angeordnet sein. Auf diese Weise kann man den verfügbaren Platz optimal ausnutzen. Es versteht sich, daß der Außendurchmesser der kreisscheibenförmigen Plattenelemente dabei kleiner ist als der Innendurchmesser der Zylindermantelelektrode, da zwischen beiden noch ein Separator angeordnet sein muß. Der Freiraum, welcher in axialer Richtung zwischen den Plattenelementen vorhanden ist, wird vollständig mit aktiver Masse ausgefüllt.

Der Separator hat dann zweckmäßigerweise ebenfalls die Form eines Hohlzylinders und kann z.B. aus einem Glasfasermaterial bestehen, in welchem trockene Schwefelsäure ($H_2SO_4$) aufgenommen ist.

Es versteht sich, daß die Mengenverhältnisse der aktiven Massen mit Bleidioxid und Blei sowie dem Elektrolyten $H_2SO_4$ in optimaler Weise aufeinander abgestimmt werden, um eine maximale Kapazität der Zelle zu erzielen. Die auf das Gewicht bezogene spezifische Energiedichte kann bei diesem Typ je nach Entladezeit im Bereich zwischen 35 und 42 Voltampèrestunden pro Kilogramm (V Ah/kg) liegen.

In der bevorzugten Ausführungsform wird dabei die äußere Zylindermantelelektrode als negative Elektrode ausgebildet und mit der elementares Blei enthaltenden aktiven Masse bestrichen. Zwischen den Plattenelementen der positiven inneren Elektrode befindet sich dann die Bleidioxid enthaltende aktive Masse.

Dabei ist in der bevorzugten Ausführungsform die äußere Elektrode in mechanischem und elektrischem Kontakt zu einer zylindrischen Hüllwand, welche aus dem gleichen elektrisch leitfähigen Material wie die erste Elektrode, vorzugsweise aus Blei, gefertigt ist und gegebenenfalls an ihrer Außenseite noch einen isolierenden Schutzüberzug, sei es aus Lack oder aus einer Kunststoffolie, aufweist. Der die äußere Elektrode umgebende Mantel ist elektrisch leitend, mechanisch fest und abgedichtet mit einer Bodenplatte verbunden, welche gleichzeitig als äußerer Kontakt dienen kann.

Der innere Stab ist vorzugsweise als Hohlzylinder ausgebildet, so daß er auf einem Zapfen aus isolierendem Material, welcher sich von der Bodenplatte bzw einer darauf liegenden Platte aus nach oben erstreckt, zentriert werden kann. Das obere Ende dieses Hohlzylinders kann geschlossen sein und unmittelbar als Anschlußkontakt an der Oberseite der Zelle herausragen.

Gemäß einer anderen vorteilhaften Ausführungsform der Erfindung sind beide Elektroden als Gitter ausgebildet und mit aktiver Masse bestrichen, und zwar eines der Gitter mit Bleidioxid ($PbO_2$), das andere mit elementarem Blei (Pb) in fein verteilter Form, wobei zwischen den bestrichenen Gitterelementen sich eine Separatorschicht befindet und beide Elektroden mit dem Separator zu einer Spirale aufgewickelt sind.

Dabei ist es besonders zweckmäßig, wenn die Elektroden einander in je einer axialen Richtung wechselseitig überragen. Auf diese Weise sind interne Anschlußkontakte in Form der axial überragenden Teile der Elektroden an je einem Ende der Zelle leicht zugänglich vorhanden. Dabei sind zweckmäßigerweise die axial vorspringenden Kanten der aufgewickelten Elektroden mit je einer Kontaktplatte verbunden, die unmittelbar einen äußeren Anschlußkontakt bilden oder aber mit einem solchen verbunden sein kann. Der zwischen den spiralig aufgewickelten Elektroden vorhandene Separator weist zweckmäßigerweise eine Kation-durchlässige Membran auf. Eine solche Membran hat den Vorteil, daß sie mechanisch relativ haltbar ist und die beiden Elektroden wirksam vor unmittelbarer Berührung miteinander schützt, da auch etwa vorspringende Teile des Gitters die Membran nicht ohne weiteres durchbohren. Zweckmäßigerweise besteht dabei der Separator aus mindestens zwei Lagen mikrofaseriger Glas- oder Mineralwolle mit einer dazwischen angeordneten Kation-Membran. Die Glas- oder Mineralwolle dient dabei als Absorptionsmittel für den Elektrolyten (Schwefelsäure), wobei die Memran selbstverständlich für die $H^+$-Ionen durchlässig sein muß.

In der bevorzugten Ausführungsform der Erfindung bestehen die Elektrodengitter aus einem wickelfähigen Bleimaterial.

Außerdem sollte das zylindrische Gehäuse einer solchen Zelle mit Boden und Deckel hermetisch dicht abgeschlossen sein. Dabei hat es sich außerdem als zweckmäßig erwiesen, wenn in axialer Richtung der Elektroden mindestens ein Entgasungsraum vorgesehen ist, der mindestens ein unter Überdruck nach außen öffnendes Ventil aufweist.

Bezüglich des eingangs erwähnten Verfahrens zur Herstellung eines zylindrischen Bleiakkus, wird die der Erfindung zugrundeliegende Aufgabe dadurch gelöst, daß ein Streifen aus einem wickelfähigen Gittermaterial verwendet wird, welcher wesentlich länger als breit ist, daß auf diesen Streifen ein Separatorstreifen von im wesentlichen gleichen Abmessungen aufgebracht wird, daß ein weiterer Gitterstreifen mit im wesentlichen gleichen Abmessungen wie der erste Gitterstreifen mit der aktiven Masse der jeweils verbleibenden Zusammensetzung bestrichen wird und durch eine Separatorlage getrennt auf die erste Elektrode aufgelegt wird, wobei sowohl zwischen den beiden Elektroden als auch auf der anderen Seite einer der Elektroden ein Separatorstreifen liegt, und daß diese aus zwei Separatorstreifen und zwei unterschiedlichen Elektrodenstreifen bestehende Vierfachlage spiralig aufgewickelt wird, während die aktive Masse noch im frischen, plastischen Zustand ist, in eine zylindrische Hülle gebracht und mit axialen Anschlußkontakten versehen wird.

Dabei sollten die gemeinsam aufgewickelten Streifen mindestens zweimal so lang wie breit und vorzugsweise fünfmal so lang wie breit sein, um eine möglichst große Gesamtfläche bereitzustellen. Sowohl die mit aktiver Masse bestrichenen Elektrodengitter als auch die Separatorschichten können relativ dünn sein und werden möglichst eng auf eine dünne zylindrische Hülse aufgewickelt, bis die äußerste Lage in etwa den vorgesehenen Enddurchmesser erreicht hat, welcher dem Innendurchmesser der äußeren zylindrischen Hülle der Zelle entspricht. Dabei werden vorzugsweise Streifen als Elektrodengitter verwendet, welche etwas breiter sind als die dazwischenliegenden Separatorstreifen, wobei einer der Streifen in einer axialen Richtung den Separatorstreifen überragt, während der andere Streifen die Separatorlage in der anderen Richtung überragt. Nach dem Aufwickeln stehen dann in je einer axialen Richtung die beiden verschiedenen Elektroden hervor und können so leicht mit äußeren Anschlußkontakten verbunden werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:

Figur 1     einen Längsschnitt durch eine erste Form eines zylindrischen Bleiakkus,

Figur 2     einen zentralen Ausschnitt aus Figur 1,

Figur 3     einen Schnitt durch einen Akku der ersten Ausführungsform entlang der Linie III-III in Figur 1,

Figur 4     eine zweite Ausführungsform eines zylindrischen Bleiakkus mit aufgewickelten Elektrodengittern,

Figur 5     den mit V bezeichneten Ausschnitt aus Figur 4 und

Figur 6     den mit VI bezeichneten Ausschnitt aus Figur 4.

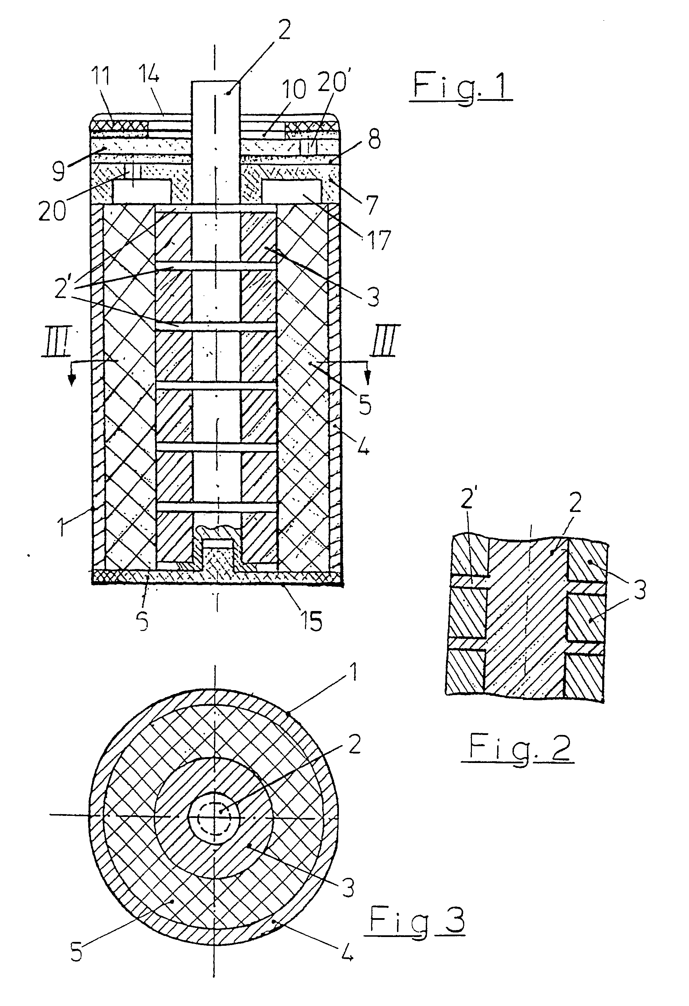

In Figur 1 erkennt man im Zentrum einer zylindrischen Zelle einen zentralen, hohlzylindrischen Stab 2, welcher an seinem oberen Ende geschlossen ist, wobei dieses obere Ende unmittelbar als äußerer Anschlußkontakt dient. Im Inneren der Zelle sind entlang des Stabes 2 in gleichmäßigen Abständen dünne, kreisscheibenförmige Platten 2' angeordnet, die einstückig mit dem Stab 2 verbunden sind, wie man im Schnittbild der Figur 2 erkennt.

Diese Platten 2' können eine Dicke von beispielsweise 1 bis 2 mm haben. In den Zwischenräumen zwischen den Platten 2' befindet sich aktive Masse 3, welche für den Fall, daß der Stab 2 als positive Anschlußelektrode dienen soll, aus einer Mischung von Schwefelsäure, pulverförmigem Bleidioxid und gegebenenfalls einem Bindemittel besteht, welche zu einer pastenartigen Mischung vermengt sind.

Die positive Elektrode wird damit insgesamt von dem Stab 2, den Platten 2' und der aktiven Masse 3 gebildet, die zusammen einen zentralen, inneren Zylinder mit dem Gesamtdurchmesser der Platten 2' bilden. Diese positive Elektrode ist umgeben von einem Separator 5 in Form eines Hohlzylinders, welcher z.B. aus einem mit Schwefelsäure imprägnierten bzw. getränkten Glasfasermaterial bestehen kann.

Die äußere negative Elektrode 4 besteht aus einem mit aktiver Masse bestrichenen Bleigitter, wobei diese aktive Masse elementares Blei in fein verteilter Form enthält. Es versteht sich, daß die Gesamtmassen von Blei, Bleidioxid und dem im Separator und in den aktiven Massen enthaltenen Elektrolyten $H_2SO_4$ im Hinblick auf eine maximale Kapazität der Zelle aufeinander abgestimmt sind.

Die negative Elektrode 4 ist von einer dünnen Bleihülle 1 umgeben, welche wiederum hermetisch dicht und gegebenenfalls auch einstückig mit der Bodenplatte 15 verbunden ist, die gleichzeitig als negativer äußerer Anschlußkontakt dient. Eine Scheibe 6 aus einem Dielektrikum bzw. Isolator ist auf der Innenseite der Bodenplatte 15 angeordnet und weist einen zentralen zylindrischen Zapfen auf, dessen Außendurchmesser dem Innendurchmesser des hohlzylindrischen Stabes 2 entspricht, so daß dieser auf den Zapfen aufgesetzt werden kann und damit zentriert ist. Auch die obere Stirnfläche der Zelle ist im wesentlichen hermetisch dicht abgeschlossen, wobei das Dielektrikum bzw. der Isolator 7 ein passendes Formteil sein kann, welches an den Stab 2 und an die Bleihülse 1 angeklebt ist. In diesem Isolator 7 sind Entgasungskammern 17 vorgesehen, in welche Gas, z.B. Wasserstoff, entweichen kann, wenn der Akku bei Verwendung eines falschen oder fehlerhaften Ladegerätes mit zu hoher Spannung geladen bzw. überladen wird. Dieser Entgasungsraum 17 kann beispielsweise ringförmig ausgebildet sein und ist über mindestens einen axialen Kanal 20 mit einer Absorptionsschicht 8 verbunden, welche wiederum über einen zum Kanal 20 versetzten Kanal 20' an der Unterseite eines elastischen Zwischenstückes 10, z.B. aus säurefestem Gummi, mündet. Dieses elastische Zwischenstück dient gleichzeitig als Ventil, da bei Überdruck im Innern der Zelle aus dem Entgasungsraum 7 über die Kanäle 20, 20', die dazwischenliegende Absorptionsschicht 8, z.B. aus Propylen, entlang der elastisch nachgebenden Unterseite der Schicht 10 und dann zwischen der Schicht 10 und dem Elektrodenstab 2 ein Gas nach außen entweichen kann.

Mit 11 ist eine wiederum elastische und elektrisch isolierende Abdeckschicht bezeichnet, welche z.B. aus Vinylplastik (Vinylkautschuk) bestehen kann. Diese Schicht 11 kann mit der äußeren Hülse 1 gebördelt sein, so daß sie einen festen Gehäusedeckel bildet. Es versteht sich, daß die Schichten 10 und 11 einen kreisförmigen zentralen Ausschnitt haben, mit welchem sie den zylindrischen Stab 2 im wesentlichen dicht umgreifen, wobei jedoch Gas unter Druck noch zwischen den Schichten 10, 11 und dem Stab 2 entweichen kann. Selbstverständlich können auch von den Abdeckschichten unabhängige Ventilöffnungen vorgesehen werden.

In der Draufsicht gemäß Figur 3 erkennt man nochmals die relativen Abmessungen der inneren Elektrode 2, 2' und 3, der äußeren Elektrode 4 und der dazwischenliegenden Separatorschicht 5. Die äußere Hülle 1 weist im allgemeinen noch einen nicht dargestellten isolierenden Überzug, z.B. eine Kunststoffolie, eine Lackierung oder dergleichen auf. Außerdem kann auch noch ein zusätzlicher Deckel 14 vorgesehen sein.

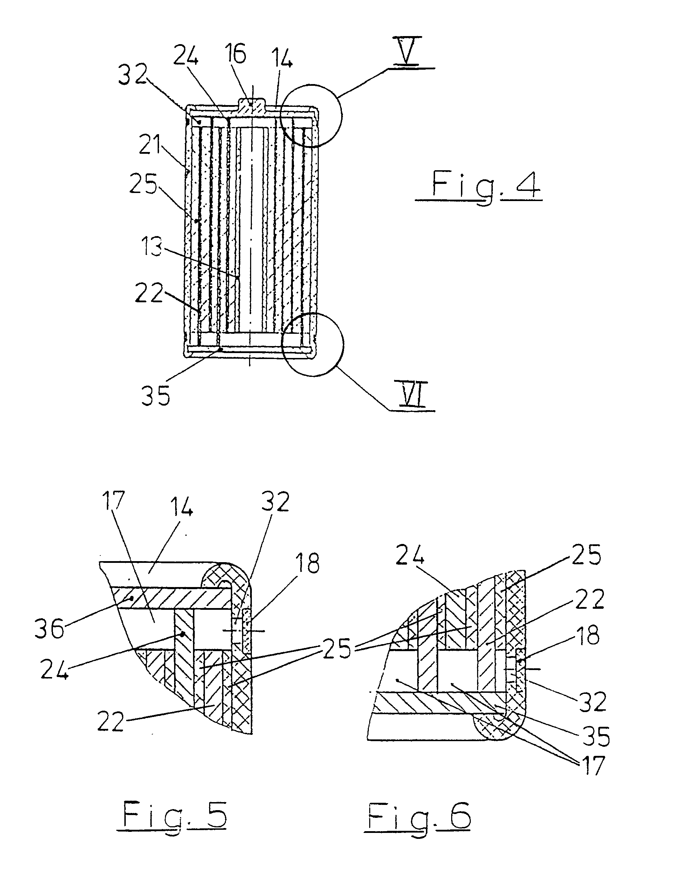

In Figur 4 ist eine weitere Ausführungsform der Erfindung schematisch dargestellt, bei welcher beide Elektroden aus einem dünnen, wickelfähigen Bleigitter in Form eines rechteckigen Streifens bestehen, wobei im vorliegenden Fall davon ausgegangen werden soll, daß die negative Elektrode 22 mit einer elementares Blei enthaltenden aktiven Masse bestrichen ist, während die positive Elektrode 24 mit der aktiven Masse bestrichen ist, die Bleidioxid enthält. Einzelheiten der Figur 4 sind deutlicher in den Figuren 5 und 6 zu erkennen. Es versteht sich, daß die relativen Größen und Abmessungsverhältnisse in der Praxis deutlich von der schematischen Darstellung der Figuren abweichen können, insbesondere können die Elektroden- und Separatorschichten wesentlich dünner und damit zahlreicher sein.

Den Aufbau einer Zelle gemäß Figur 4 versteht man am besten anhand der Beschreibung eines entsprechenden Herstellungsverfahrens, welches z.B. folgendermaßen aussehen kann: Man nimmt zunächst einen länglichen, rechteckigen Streifen aus einem Separatormaterial, welches später eine der Schichten 25 bilden soll. Ohne daß es hier auf die genauen Abmessungen ankommt, könnte ein solcher Streifen beispielsweise 50 mm breit und 100 bis 200 mm lang sein. Anschließend wird ein mit aktiver Masse bestrichener Streifen aus einem Bleigitter, welcher eine Breite von etwa 52 bis 55 mm hat, auf den Separatorstreifen 25 derart aufgelegt, daß er an einer Längskante bündig mit dem Separatorstreifen 25 abschließt, an der anderen Längskante jedoch den Separatorstreifen um 2 bis 5 oder auch mehr Millimeter überragt. Dieser den Separatorstreifen überragende Teil des Bleigitters wird beim Bestreichen mit aktiver Masse vorzugsweise freigelassen.

Hierauf kommt erneut eine Separatorschicht 25 von im wesentlichen den gleichen Abmessungen und auf diese wird dann ein wiederum ein mit aktiver Masse der entsprechend anderen Zusammensetzung bestrichener Streifen aus einem Bleigittermaterial derart aufgelegt, daß er mit der Längskante des Separatorstreifens bündig abschließt, die der zuvor erwähnten bündigen Kante gegenüberliegt. Auch in diesem Fall bleibt wieder der die Separatorlage überragende Abschnitt des Bleigitterstreifens von aktiver Masse frei. Man erhält so einen vierlagigen Streifen mit einer Gesamtbreite von etwa 54 bis 60 mm und einer Länge von ca. 100 bis 200 mm, wobei jeweils eine Elektrodengitterlage die übrigen Lagen in einer Breitenrichtung überragt und die Lagen ansonsten seitlich bündig miteinander abschließen. Dieser vierlagige Streifen wird nun eng auf eine zentrale zylindrische Hülse 13 aufgewickelt. Dabei ist es wichtig, daß die aktive Masse noch plastisch und verformbar und auch das Bleigitter wickelfähig ist. Nach dem Aufwickeln hat der Streifen eine in etwa zylindrische Gestalt und kann in eine passende Hülse 21 eingebracht werden. Die überragenden Enden der Elektrodengitter 22, 24 werden dann mit einer unteren, elektrisch leitfähigen Platte 35 bzw. einer oberen elektrisch leitfähigen Platte 36 fest verbunden. Die axialen Ränder der Hülse 21 können dann umgebördelt werden und die Platten 35, 36 mit der dazwischenliegenden Elektrodenanordnung fest in der Hülse 21 halten.

Es versteht sich, daß die Länge des aufzuwickelnden, vierlagigen Streifens im wesentlichen nur von seiner Dicke, der Dicke der Hülse 13 und dem gewünschten maximalen Außendurchmesser der Zelle abhängt.

Statt die Lagen aufzuwickeln, könnten auch mehrere zylindrische Hülsen unterschiedlichen Durchmessers, und zwar abwechselnd mit aktiver Masse bestrichene Gitterelektroden und Separatorhülsen ineinandergeschoben werden. Ebenso könnten kürzere rechteckige Streifen jeweils zu einzelnen Zylindern zusammen- und aufeinandergewickelt werden.

In den Figuren 5 und 6 sind noch jeweils Entgasungsräume 17 zu erkennen, die über eine Ventilöffnung 32 mit einer ringförmig in die Hülse 21 eingefrästen oder - gedrückten Nut 18 verbunden sind. Die beiden Entgasungsräume 17 überdecken spiralförmig im wesentlichen beide Stirnflächen der aufgewickelten Elektrodenanordnung. Außerdem sind die einzelnen Spiralgänge noch gasdurchlässig miteinander verbunden, da die Elektrodengitter 22, 24 in diesem Bereich nicht mit aktiver Masse bestrichen und somit gasdurchlässig sind. In der Nut 18 liegt ein passender Gummiring, welcher im Normalfall die Ventilöffnung 32 und den Raum 17 von der Umgebung hermetisch dicht abschließt. In der äußeren Spiralbahn des Entgasungsraumes 17 kann zweckmäßigerweise wiederum eine gasdurchlässige Absorptionsschicht für Schwefelsäure, z.B. aus Propylen, vorgesehen sein.

Die obere Elektrodenplatte 36 weist einen zentralen zylindrischen Fortsatz auf, der als positiver Anschlußkontakt 16 dient. Die Oberseite der Platte 36 ist noch mit einer isolierenden Deckscheibe 14 versehen, durch welche lediglich der Anschlußkontakt 16 hindurchragt.

Mit der vorliegenden Erfindung ist es gelungen, einen zylindrischen Bleiakku zu schaffen, welcher anstelle herkömmlicher Batterien und auch anstelle herkömmlicher Akkus breite Verwendung finden kann, dabei gleichzeitig relativ einfach und zu geringen Kosten herstellbar ist und dennoch eine ausreichende Kapazität hat.

**Patentansprüche**

1. Bleiakkumulator in Zylinderform, wobei mindestens eine erste (4, 24) seiner Elektroden (2, 2', 3, 22; 4, 24) an ihrer Außenseite einer Zylindermantelform angepaßt ist und im wesentlichen parallel zu und in geringem Abstand von der Zylindermantelwand (1) des Akkumulators verläuft, und wobei beide Elektroden durch einen ionendurchlässigen Separator voneinander vor direktem Kontakt geschützt sind, **dadurch gekennzeichnet,** daß mindestens die erste Elektrode (2, 2', 3, 22; 4, 24) als Gitter ausgebildet und mit aktiver Masse (3) in Pastenform bestrichen ist, welche Schwefelsäure und entweder Blei oder Bleidioxid in fein verteilter Form enthält, während die jeweils andere Elektrode Einrichtungen zur Aufnahme und zum Halten der jeweils anderen aktiven Masse, welche Bleidioxid bzw. Blei in fein verteilter Form enthält, aufweist.

2. Bleiakkumulator nach Anspruch 1, dadurch gekennzeichnet, daß die erste Elektrode (4) die Form eines Zylindermantels hat und daß die andere Elektrode (2, 2', 3) aus einem zentralen Stab (2) mit mehreren, senkrecht zum Stab (2) verlaufenden Plattenelementen (2') besteht, welche entlang des Stabes (2) im Abstand voneinander angeordnet sind, so daß die aktive Masse (3) zwischen diesen Plattenelementen (2') aufnehmbar ist.

3. Bleiakkumulator nach Anspruch 2, dadurch gekennzeichnet, daß die Plattenelemente (2') einstückig mit dem Stab (2) verbunden sind.

4. Bleiakkumulator nach Anspruch 3, dadurch gekennzeichnet, daß Stab (2) und Plattenelement (2') aus Blei gegossen oder gepreßt sind.

5. Bleiakkumulator nach einem der Ansprüche 2 bis 4, dadurch gekennzeichnet, daß der Stab (2) als Hohlzylinder und die Plattenelemente als Kreisscheiben mit gleichmäßigen relativen Abständen ausgebildet sind und daß Stab (2) und Plattenelemente (3) konzentrisch zur äußeren, zylindrischen Mantelelektrode angeordnet sind.

6. Bleiakkumulator nach einem der Ansprüche 2 bis 5, dadurch gekennzeichnet, daß die Zylindermantelelektrode (4) als negative Elektrode mit der Blei in fein verteilter Form enthaltenden aktiven Masse bestrichen ist.

7. Bleiakkumulator nach einem der Ansprüche 2 bis 6, dadurch gekennzeichnet, daß die Zylindermantelelektrode (4) in mechanischem und elektrischem Kontakt zu einer zylindrischen Hülle (1) steht, welche aus dem gleichen, elektrisch leitfähigen Material wie das Gitter der Mantelelektrode (4) und vorzugsweise aus Blei gefertigt ist, wobei die Hülle (1) mit der als äußerer Kontakt ausgebildeten Bodenplatte (15) elektrisch und mechanisch fest und abgedichtet verbunden ist.

8. Bleiakkumulator nach einem der Ansprüche 2 bis 7, dadurch gekennzeichnet, daß der Stab (2) der zentralen Elektrode auf einem sich von der Bodenplatte erstreckenden Zapfen aus isolierendem Material zentriert ist.

9. Bleiakkumulator nach Anspruch 1, dadurch gekennzeichnet, daß beide Elektroden (22, 24) als Gitter ausgebildet und mit aktiver Masse bestrichen sind und zwar eines der Gitter mit Blei und das andere mit Bleidioxid jeweils in fein verteilter Form, wobei beide bestrichenen Gitterelektroden gemeinsam zu einer Spiral- oder Zylinderform aufgewickelt und durch mindestens eine dazwischenliegende Separatorschicht elektrisch voneinander getrennt sind.

10. Bleiakkumulator nach Anspruch 9, dadurch gekennzeichnet, daß die Elektroden (22, 24) einander wechselseitig in je einer axialen Richtung überragen.

11. Bleiakkumulator nach Anspruch 10, dadurch gekennzeichnet, daß die axial vorragenden Kanten der Elektroden (22, 24) mit je einer Kontaktplatte (35, 36) verbunden sind, welche unmittelbar die äußeren Anschlußkontakte (35, 16) bilden oder mit diesen verbunden sind.

12. Bleiakkumulator nach einem der Ansprüche 9 bis 11, dadurch gekennzeichnet, daß der Separator eine Kation-durchlässige Membran aufweist.

13. Bleiakkumulator nach Anspruch 12, dadurch gekennzeichnet, daß der Separator (25) aus mindestens zwei Lagen mikrofaseriger Glas- oder Mineralwolle mit einer dazwischen angeordneten Kation-Membran besteht.

14. Bleiakkumulator nach einem der Ansprüche 1 bis 13, dadurch gekennzeichnet, daß das Gitter der mit aktiver Masse bestrichenen Elektroden (4, 22, 24) aus einem wickelfähigen Bleimaterial besteht.

15. Bleiakkumulator nach einem der Ansprüche 1 bis 14, dadurch gekennzeichnet, daß das zylindrische Gehäuse (1) mit Boden (15, 35) und Deckel (14) hermetisch dicht abgeschlossen ist.

16. Bleiakkumulator nach Anspruch 15, dadurch gekennzeichnet, daß axial von den Elektroden (2, 2', 3, 4, 22, 24) mindestens ein Entgasungsraum (17) vorgesehen ist, der über mindestens ein unter Überdruck nach außen öffnendes Ventil (32) mit der Umgebung verbunden ist.

17. Verfahren zur Herstellung eines zylindrischen Bleiakkumulators, bei welchem ein im wesentlichen rechteckiger Streifen oder eine Platte aus einem Gittermaterial, vorzugsweise aus Blei, mit einer pastenartigen Mischung bestrichen wird, welche im wesentlichen Schwefelsäure und entweder Blei oder Bleidioxid in fein verteilter Form sowie gegebenenfalls ein Bindemittel enthält, dadurch gekennzeichnet, daß ein Gitterstreifen aus einem wickelfähigen Material verwendet wird, daß auf einer Seite dieses Streifens ein Separatorstreifen von im wesentlichen gleichen Abmessungen aufgebracht wird, daß hierauf ein weiterer mit aktiver Masse der jeweils verbleibenden Zusammensetzung bestrichener Streifen folgt und daß wiederum einer der beiden bestrichenen Gitterstreifen mit einer weiteren Separatorlage abgedeckt wird und daß diese aus zwei Separatorstreifen und zwei mit unterschiedlichen aktiven Massen bestrichenen Elektrodenstreifen bestehende Vierfachlage spiralig aufgewickelt wird, während sich die aktive Masse noch im frischen, nicht ausgetrockneten Zustand befindet, in eine zylindrische Hülle eingebracht und mit axialen Anschlußkontakten versehen wird.

18. Verfahren nach Anspruch 17, dadurch gekennzeichnet, daß die Breite der Streifen aus Gittermaterial größer ist als die Breite der Separatorstreifen, wobei die Elektrodengitter und die Separatorlagen derart aufeinandergeschichtet werden, daß die verschiedenen Elektrodengitter in jeweils entgegengesetzter Richtung über die Breite der Separatorlagen hinausragen.

19. Verfahren nach Anspruch 17 oder 18, dadurch gekennzeichnet, daß die Länge der Gitter- und der Separatorstreifen größer ist als ihre Breite und mindestens das Zweifache, vorzugsweise das Fünffache ihrer Breite beträgt.

20. Verfahren nach einem der Ansprüche 17 bis 19, dadurch gekennzeichnet, daß ein mindestens teilweise saugfähiges Separatormaterial verwendet wird, welches vor dem Aufbringen auf die Elektroden mit Schwefelsäure imprägniert wird und daß das Separatormaterial mindestens eine mechanisch widerstandsfähige Schicht aufweist.

Fig.1

Fig.2

Fig 3

Fig.4

Fig.5

Fig.6

**Europäisches Patentamt**

# EUROPÄISCHER RECHERCHENBERICHT

Nummer der Anmeldung

## EP 91 10 5331

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 846 175  (RAMESH R. DESAI)<br>* Spalte 3, Zeile 27 - Spalte 6, Zeile 75 *<br>— — — | 1,15 | H 01 M 10/12<br>H 01 M 4/70 |
| Y | FR-A-1 136 796  (THOMAS SWAN LONG)<br>* Seite 3, Letzte Absatz; Patentsnspruch 13 *<br>— — — | 2,3,5-7 | |
| Y | DE-C-1 752 13  (MAX SCHNEIDER)<br>* Insgesamt *<br>— — — | 4 | |
| X | GB-A-2 136 193  (CHUN TSAI YEH)<br>* Insgesamt * | 1 | |
| Y | | 2-7 | |
| | — — — | | |
| X | US-A-3 870 563  (SAMUEL RUBEN)<br>* Spalte 3, Zeile 1 - Spalte 5, Zeile 34 *<br>— — — | 1 | |
| X | FR-A-3 909 51  (SCHLESISCHE AKKUMULATORENWER-<br>KE AG)<br>* Insgesamt * | 1 | |
| A | | 2-5 | |
| | — — — | | **RECHERCHIERTE SACHGEBIETE (Int. Cl.5)** |
| X | PATENT ABSTRACTS OF JAPAN, Band 8, Nr. 111<br>(E-246)[1548], 24. Mai 1984;<br>& JP-A-59 27 477 (MATSUSHITA DENKI SANGYO K.K.)<br>13-02-1984<br>* Insgesamt *<br>— — — | 9,17 | H 01 M 10/12<br>H 01 M 10/34<br>H 01 M 4/70 |
| Y | IDEM<br>— — — | 10-14,<br>18-20 | |
| Y | GB-A-1 144 438  (ROBERT BOSCH GmbH)<br>* Inspesamt *<br>— — —<br><div align="right">–/–</div> | 10-14,<br>18-20 | |

Der vorliegende Recherchenbericht wurde für alle Patentansprüche erstellt

| Recherchenort | Abschlußdatum der Recherche | Prüfer |
|---|---|---|
| Den Haag | 13 Juni 91 | DE VOS L.A.R. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 515 215  (ACCUMULATEUR CHARGEUR DARY)<br>* Insgesamt * | 9,10,18 | |
| A | DE-A-3 543 425  (VARTA BATTERIE AG)<br>* Zusammenfassung; Spalte 4, Zeilen 23-37 * | 2,3 | |
| A | FR-A-6 340 17  (R. MOLLET)<br>* Insgesamt * | 2-4 | |
| A | DE-A-2 403 222  (NIMMERRICHTER)<br>* Insgesamt * | 9-20 | |
| A | PATENT ABSTRACTS OF JAPAN, Band 8, Nr. 53<br>(E-231)[1490], 9. Marz 1984;<br>& JP-A-58 206 073 (MATSUSHITA DENKI SANGYO K.K.)<br>01-12-1983<br>* Insgesamt * | 1,16 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| Den Haag | 13 Juni 91 | DE VOS L.A.R. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
─────────────────────────────
& : Mitglied der gleichen Patentfamilie, übereinstimmendes Dokument